Europäisches Patentamt

European Patent Office

Office européen des brevets

(11) Veröffentlichungsnummer : **0 033 379**
**B1**

# (12) EUROPÄISCHE PATENTSCHRIFT

(45) Veröffentlichungstag der Patentschrift :
30.03.83

(21) Anmeldenummer : **80107796.7**

(22) Anmeldetag : **11.12.80**

(51) Int. Cl.³ : **B 60 T   8/18**, B 60 T 13/58

(54) **Relaisventil in lastabhängig geregelten Zweikreis-Druckmittelbremsanlagen.**

(30) Priorität : **01.02.80 DE 3003627**

(43) Veröffentlichungstag der Anmeldung :
**12.08.81 Patentblatt 81/32**

(45) Bekanntmachung des Hinweises auf die Patenterteilung : **30.03.83 Patentblatt 83/13**

(84) Benannte Vertragsstaaten :
**AT CH DE FR GB IT LI NL SE**

(56) Entgegenhaltungen :
**DE A 2 820 107
DE A 2 907 426
DE B 1 755 953
DE B 2 548 973**

(73) Patentinhaber : **WABCO Westinghouse Fahrzeugbremsen GmbH
Am Lindener Hafen 21 Postfach 91 12 80
D-3000 Hannover 91 (DE)**

(72) Erfinder : **Pohl, Wolfgang
Im Stühe 27
D-3008 Garbsen 6 (DE)**
Erfinder : **Ulrich, Helmut
Schiergrund 19
D-3257 Springe (DE)**
Erfinder : **Deike, Karl-Heinz
Feldstrasse 17
D-3017 Pattensen 5 (DE)**

(74) Vertreter : **Schrödter, Manfred
WABCO Westinghouse Fahrzeugbremsen GmbH Am
Lindener Hafen 21 Postfach 91 12 80
D-3000 Hannover 91 (DE)**

Jouve, 18, rue St-Denis, 75001 Paris, France

## Relaisventil in lastabhängig geregelten Zweikreis-Druckmittelbremsanlagen

Die Erfindung betrifft ein Relaisventil gemäß dem Oberbegriff des Anspruchs 1.

In der DE-A 2 907 426 sind hydraulisch gesteuerte Zweikreis-Druckluftbremsanlagen beschrieben, deren Bremsdruck im Hinterachsbremskreis lastabhängig geregelt ist, wobei in einer ersten Ausführung ein hydraulisch gesteuerter pneumatischer Bremskraftregler und in einer zweiten Ausführung ein rein pneumatischer Bremskraftregler den lastabhängigen Bremsdruck regelt.

Zur lastabhängigen Regelung des Bremsdruckes im jeweiligen Vorderachsbremskreis der beiden erwähnten Bremsanlagen ist in der DE-A 2 907 426 ein Relaisventil vorgeschlagen, dessen Ansteuerung vom hydraulischen Bremsdruckgeber des hydraulischen Steuerteiles der Bremsanlage und vom lastabhängig geregelten Bremsdruck des Hinterachsbremskreises erfolgt und dessen in den Vorderachsbremskreis ausgesteuerter Bremsdruck in einem bestimmten Verhältnis den lastabhängig geregelten Druckverhältnissen des Hinterachsbremskreises unterliegt.

Es hat sich gezeigt, daß bei Ausfall des Hinterachsbremskreises, was gleichzeitig zum Ausfall der Teilanansteuerung des Relaisventils führt, die von der Fußkraft aufzubringenden Steuerkräfte der noch intakten Ansteuerung vom hydraulischen Bremsdruckgeber unter bestimmten Umständen nicht ausreichen kann, um bei einer Vollbremsung die Bremskraft im Vorderachsbremskreis zu erzeugen, welche die an eine Zweikreisbremsanlage gestellte Forderung bezüglich der Restbremswirkung des intakten Bremskreises bei Ausfall eines Bremskreises erfüllt.

Der vorliegenden Erfindung liegt deshalb die Aufgabe zugrunde, ein Relaisventil der eingangs genannten Art zu schaffen, welches auch bei Ausfall des lastabhängig geregelten Hinterachsbremskreises einen ausreichenden Bremsdruck in den Vorderachsbremskreis aussteuert.

Diese Aufgabe wird durch die im Anspruch 1 aufgeführte Erfindung gelöst.

Durch die in einfacher Weise vorteilhaft im Gehäuse des Relaisventils anordbaren Mittel, welche bei Ausfall des lastabhängig geregelten Steuerdruckes eine Verbindung zwischen einer dritten Steuerfläche des Regelkolbens und dem in den Vorderachsbremskreis ausgesteuerten Bremsdruck öffnen, wird die vom Bremsdruck des Regelkolbens beaufschlagte Reaktionsfläche um die Größe der dritten Steuerfläche reduziert, wodurch der von den Fußkräften aufzubringende Steuerdruck in demselben Verhältnis reduziert wird, so daß trotz Ausfall des Hinterachsbremskreises der Bremsdruck im Vorderachsbremskreis eine ausreichende Bremswirkung erzielt.

Vorteilhafte Ausgestaltungen der Erfindung sind den Unteransprüchen zu entnehmen.

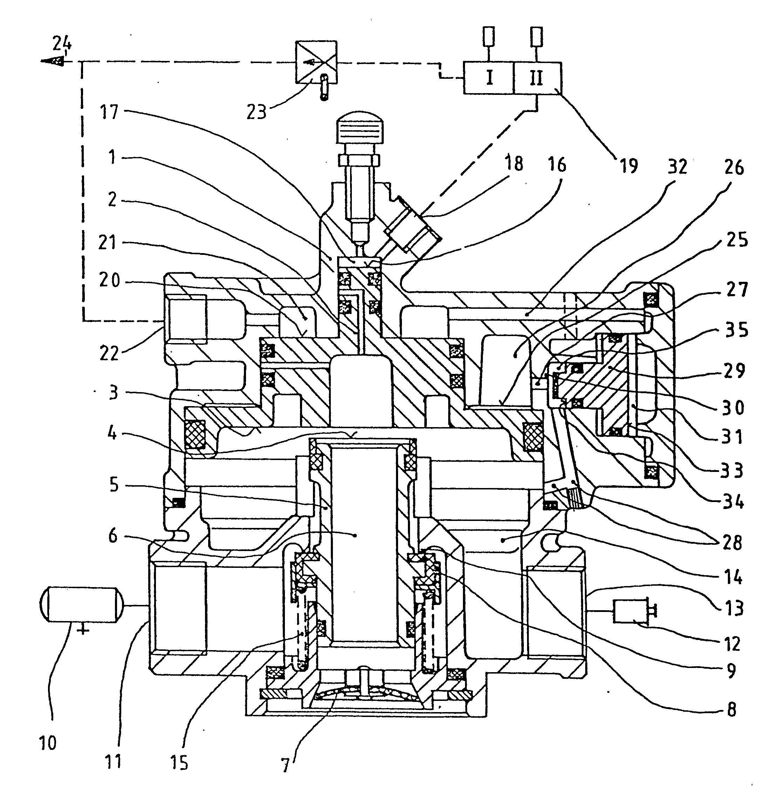

Die Erfindung wird anhand eines Ausführungsbeispiels, das in der Zeichnung dargestellt ist, näher erläutert :

Die Fig. zeigt ein Relaisventil, dessen Relaiskolben (Regelkolben) drei in eine Richtung wirkende Steuerflächen aufweist.

Im oberen Teil eines Gehäuses 1 ist ein Regelkolben 2 angeordnet, dessen untere Fläche 3 mit der oberen Fläche 4 eines im unteren Teil des Gehäuses 1 geführten Doppelventilkörpers 5 ein Auslaßventil 3, 4 bildet, dessen Entlüftung in die Atmosphäre sich über eine Bohrung 6 des Doppelventilkörpers 5 und eine Entlüftungsöffnung 7 vollzieht. Der Doppelventilkörper 5 bildet mit einer Ringfläche 8 und einem gehäusefesten, als Ventilsitz ausgebildeten Anschlag 9 ein Einlaßventil 8, 9, welches über eine Gehäusekammer 14 eine Verbindung zwischen einem mit einer Druckluftquelle 10 verbundenen Einlaßanschluß 11 und einem mit den Bremszylindern 12 verbundenen Auslaßanschluß 13 herstellt.

Der Doppelventilkörper 5 stützt sich so auf einer Feder 15 ab, daß das Auslaßventil 3, 4 von der Feder 15 in Schließstellung vorgespannt ist.

Der Regelkolben 2 weist eine erste obere Steuerfläche 16 auf, die Teil einer über diesem Kolben 2 befindlichen ersten Steuerkammer 17 ist, welche über einen Anschluß 18 eine Verbindung mit einem hydraulischen Bremsdruckgeber 19 herstellt. Eine zweite Steuerfläche 20 des Relaiskolbens 2 bildet einen Teil einer zweiten Steuerkammer 21, welche über einen Anschluß 22 mit dem mittels eines Bremskraftreglers 23 lastabhängig geregelten Bremsdruck des Hinterachsbremskreises 24 verbunden ist.

Eine dritte Steuerfläche 25, welche Teil einer dritten Steuerkammer 26 ist, ist über Gehäusebohrungen 27 und 28 mit der unterhalb des Regelkolbens 2 befindlichen Gehäusekammer 14 verbindbar. Ein kolbenförmiger Ventilkörper 29 ist derart im Gehäuse 1 des Relaisventils angeordnet, daß das eine Ende des Ventilkörpers 29 mit einem gehäusefesten Ventilsitz einer Gehäusewand 30 ein Ventil 29, 30 bildet, welches die Verbindung zwischen der dritten Steuerkammer 26 und der Gehäusekammer 14 bzw. zwischen den Bohrungen 27 und 28 je nach dessen Stellung unterbricht oder öffnet. Eine oberhalb des Ventilkörpers 29 angeordnete Kammer 31 steht über eine Gehäusebohrung 32 mit der zweiten Steuerkammer 21 in Verbindung, wobei der Druck in der Kammer 31, welcher auf die Fläche 33 am anderen Ende des Ventilkörpers 29 wirkt, eine Schließstellung des Ventils auslöst. Eine Ringfläche 34 des Ventilkörpers 29, welche einen Teil einer Ringkammer 35 bildet, liegt gegenüber der Fläche 33 und ist über die Bohrung 28 vom Druck der Kammer 14 in Öffnungsrichtung des Ventils 29, 30 wirkend beaufschlagbar.

Die Funktion des Relaisventils in der dargestellten Einbauweise ist wie folgt :

Der vom Bremsdruckgeber 19 ausgelöste hydraulische Steuerdruck gelangt über den Anschluß 18 in die erste Steuerkammer 17 und drückt durch Beaufschlagung der ersten Kolbenfläche 16 den Kolben 2 nach unten. Gleichzeitig gelangt das vom Bremskraftregler 23 in seiner Druckstärke lastabhängig geregelte Druckmittel über den Anschluß 22 in die zweite Steuerkammer 21 und wirkt durch Beaufschlagung der zweiten Steuerfläche 20 in derselben Richtung wie der Druck in der ersten Steuerkammer 17. Die Abwärtsbewegung des Regelkolbens 2 schließt das Auslaßventil 3, 4 und öffnet das Einlaßventil 8, 9, und Vorratsluft strömt aus dem Behälter 10 über den Anschluß 11 in die Kammer 14 und den Anschluß 13 in die Bremszylinder 12 des Vorderachsbremskreises. Damit baut sich in der Kammer 14 ein Druck auf, der auf die gesamte untere Fläche 3 des Regelkolbens wirkt. Sobald die aus diesem Druck resultierende Kraft etwas größer ist als die Aktionskraft aus den Drükken in den Kammern 17 und 21, bewegt sich der Kolben 2 nach oben und das Einlaßventil 8, 9 schließt, womit eine Abschlußstellung erreicht ist.

Nach Abbau der Steuerdrücke an den Anschlüssen 18 und 22 hebt der Druck in der Kammer 14 den Kolben 2 an, und das Auslaßventil 3, 4 öffnet, so daß die Bremszylinder 12 über die Bohrung 6 und die Entlüftung 7 entsprechend dem Druckabbau an den Anschlüssen 18 und 22 teilweise oder vollständig entlüftet werden.

Während der geschilderten normalen Betriebsverhältnisse ist während der Bremsbetätigung das Ventil 29, 30 geschlossen, da das Verhältnis der Flächen 33 und 34 derart ausgelegt ist, daß die auf die Fläche 33 wirkende Kraft überwiegt.

Bei Ausfall des Hinterachsbremskreises entfällt die Kraft auf die Steuerfläche 20 des Regelkolbens 2 und somit auf die Fläche 33 des Ventilkörpers 29, so daß die aus der Kammer 14 durch die Bohrung 28 auf die Ringfläche 34 des Ventilkörpers 29 wirkende Kraft das Ventil 29, 30 öffnet und in der dritten Steuerkammer 26 sich ein Druck aufbaut, der auf die dritte Steuerfläche 25 des Regelkolbens 2 wirkt.

Die wirksame Reaktionskraft auf die untere Fläche 3 des Regelkolbens 2 ist somit um die Kraft reduziert, welche auf die dritte Steuerfläche 25 wirkt, so daß trotz Ausfall des Hinterachsbremskreises ein ausreichender Bremsdruck im Vorderachsbremskreis aufrechterhalten wird.

**Ansprüche**

1. Relaisventil in einer Zweikreis-Druckmittelbremsanlage für Kraftfahrzeuge mit einem zweikreisigen hydraulischen Steuerteil, wobei zur Steuerung der Bremsdrücke ein Zweikreis-Bremsdruckgeber (19) vorgesehen ist und wobei der Bremsdruck im ersten Bremskreis mittels eines Bremskraftreglers (23) lastabhängig geregelt ist, welches folgende Merkmale umfaßt :

a) das Relaisventil ist als Be- und Entlüftungsventil zwischen den zweiten Steuerkreis und den zweiten Bremskreis geschaltet ;

b) der die Be- und Entlüftung steuernde Regelkolben (2) des Relaisventils ist mit zwei druckdicht voneinander getrennten Steuerflächen (16, 20) versehen, welche Teile einer ersten (17) und einer zweiten (21) Steuerkammer bilden ;

c) die erste Steuerkammer (17) ist vom Druck des zweiten Steuerkreises des hydraulischen Bremsdruckgebers (19) und die zweite Steuerkammer (21) vom hydraulischen oder pneumatischen Druck des lastabhängig geregelten Bremsdruckes des ersten Bremskreises beaufschlagbar, gekennzeichnet durch folgende Merkmale :

d) am Regelkolben (2) ist eine dritte Steuerfläche (25) vorgesehen, welche einen Teil einer dritten Steuerkammer (26) bildet ;

e) die dritte Steuerkammer (26) ist mit dem vom Be -und Entlüftungsventil in den zweiten Bremskreis ausgesteuerten Bremsdruck beaufschlagbar ;

f) es sind Mittel vorgesehen, welche bei intaktem ersten Bremskreis die Verbindung zwischen der dritten Steuerkammer (26) und dem zweiten Bremskreis sperren und bei defektem ersten Bremskreis diese Sperrung öffnen.

2. Relaisventil nach Anspruch 1, das durch folgende Merkmale gekennzeichnet ist :

a) das Sperrmittel besteht aus einem kolbenförmigen Schaltglied (29), dessen Stirnfläche am einen Ende mit einem an einer Gehäusewand (30) angeordneten Ventilsitz ein Ventil (29, 30) bildet ;

b) die Stirnfläche (33) am anderen Ende des Schaltgliedes (29) bildet die Wirkfläche einer in Schließrichtung des Ventils (29, 30) wirkenden Kammer (31) ;

c) ein Absatz des Schaltgliedes (29) bildet die ringförmige Wirkfläche (34) einer in Öffnungsrichtung des Ventils (29, 30) wirkenden Ringkammer (35).

3. Relaisventil nach Ansprüchen 1 und 2, gekennzeichnet durch folgendes Merkmal :

die Kammer (31) ist über Gehäusebohrungen (32) mit der zweiten Steuerkammer (21) verbunden.

4. Relaisventil nach Ansprüchen 1 bis 3, gekennzeichnet durch folgendes Merkmal :

die Ringkammer (35) ist über Gehäusebohrungen (28) mit dem zweiten Bremskreis verbunden.

5. Relaisventil nach einem der Ansprüche 2-4, gekennzeichnet durch folgendes Merkmal :

die Ringkammer (35) ist bei geöffnetem Ventil (29, 30) über eine Bohrung (27) der Gehäusewand (30) mit der dritten Steuerkammer (26) verbunden.

6. Relaisventil nach einem der Ansprüche 2-5, gekennzeichnet durch folgendes Merkmal :

die Ringfläche (34) des Schaltgliedes (29) ist kleiner als dessen gegenüberliegende Stirnfläche (33).

**Claims**

1. Relay valve in a dual-circuit pressure- medium brake installation for motor vehicles having a dual-circuit hydraulic control part, a dual-circuit brake-pressure generator (19) being provided to control the brake pressures and the brake pressure in the first brake circuit being regulated in dependence on the load by means of a brake force regulator (23), which comprises the following features :

a) the relay valve is connected between the second control circuit and the second brake circuit as a valve to permit the ingress and egress of air ;

b) the regulating piston (2) of the relay valve controlling the ingress and egress of air is provided with two control faces which are separated from each other so that they are pressure-tight, and which form parts of a first (17) and a second (21) control chamber ;

c) the pressure of the second control circuit of the hydraulic brake-pressure generator (19) can be admitted to the first control chamber (17) and the hydraulic or pneumatic pressure of the brake pressure, regulated in dependence on the load, of the first brake circuit can be admitted to the second control chamber (21), characterised by the following features :

d) there is provided at the regulating piston (2) a third control face (25) which forms a part of a third control chamber (26) ;

e) the brake pressure in the second brake circuit modulated by the valve permitting the ingress and egress of air can be admitted to the third control chamber (26) ;

f) means are provided which block the connection between the third control chamber (26) and the second brake circuit if the first brake circuit is operative, and open this block if the first brake circuit is defective.

2. Relay valve according to claim 1, which is characterised by the following features :

a) the blocking means comprises a switching member (29) in the form of a piston, the end face of which at one end forms, together with a valve seat arranged at a housing wall (30) a valve (29, 30) ;

b) the end face (33) at the other end of the switching member (29) forms the effective face of a chamber (31) acting in the closing direction of the valve (29, 30) ;

c) a shoulder of the switching member (29) forms the annular effective face (34) of an annular chamber (35) acting in the opening direction of the valve (29, 30).

3. Relay valve according to claims 1 and 2, characterised by the following feature :

the chamber (31) is connected to the second control chamber (21) via bores (32) in the housing.

4. Relay valve according to claims 1 to 3, characterised by the following feature :

the annular chamber (35) is connected to the second brake circuit via bores (28) in the housing.

5. Relay valve according to one of claims 2 to 4, characterised by the following feature :

when the valve (29, 30) is open, the annular chamber (35) is connected to the third control chamber (26) via a bore (27) in the wall (30) of the housing.

6. Relay valve according to one of claims 2 to 5, characterised by the following feature :

the annular face (34) of the switching member (29) is smaller than the end face (33) opposed thereto.

## Revendications

1. Soupape-relais d'un équipement de freinage de véhicules par fluide sous pression et à deux circuits, comprenant un bloc de commande hydraulique à deux circuits, un capteur (19) de pression de freinage à deux circuits étant prévu pour la commande des pressions de freinage et la pression dans le premier circuit de freinage étant réglée en fonction de la charge par un régulateur de force de freinage (23), ladite soupape-relais présentant les particularités suivantes :

a) la soupape-relais est branchée en soupape d'aération et de purge entre le second circuit de commande et le second circuit de freinage ;

b) le piston de réglage (2) de la soupape-relais commandant l'aération et la purge présente deux faces de commande (13, 20) séparées avec étanchéité à la pression et faisant partie d'une première (17) et d'une seconde (21) chambre de commande ;

c) la première chambre de commande (17) est alimentée par la pression du second circuit de commande du capteur de pression de freinage hydraulique (19) et la seconde chambre de commande (21) par la pression hydraulique ou pneumatique de la pression réglée en fonction de la charge dans le premier circuit de freinage, et caractérisée en ce que :

d) une troisième face de commande (25) est prévue sur le piston de réglage (2) et forme une partie d'une troisième chambre de commande (26) ;

e) la troisième chambre de commande (26) est alimentée par la pression de freinage commandée par la soupape d'aération et de purge dans le second circuit de freinage ;

f) des moyens sont prévus qui bloquent la liaison entre la troisième chambre de commande (26) et le second circuit de freinage quand le premier circuit de freinage est intact, et suppriment ce blocage quand le premier circuit de freinage est défectueux.

2. Soupape-relais selon revendication 1, caractérisée en ce que :

a) les moyens de blocage sont constitués par un organe de commutation (29) en forme de piston, dont la face frontale à une extrémité forme une soupape (29, 30) avec un siège situé sur une paroi (30) du corps ;

b) la face frontale (33) à l'autre extrémité de l'organe de commutation (29) constitue la face active d'une chambre (31) agissant dans le sens de fermeture de la soupape (29, 30) ;

c) un épaulement de l'organe de commutation (29) forme la surface active annulaire (34) d'une chambre annulaire (35) agissant dans le sens d'ouverture de la soupape (29, 30).

3. Soupape-relais selon revendications 1 et 2, caractérisée en ce que :

la chambre (31) est reliée à la seconde chambre de commande (21) par des alésages (32) du corps.

4. Soupape-relais selon revendications 1 à 3, caractérisée en ce que :

la chambre annulaire (35) est reliée au second circuit de freinage par des alésages (28) du corps.

5. Soupape-relais selon une quelconque des revendications 2 à 4, caractérisée en ce que :

la chambre annulaire (35) est reliée par un alésage (27) de la paroi (30) du corps à la troisième chambre de commande (26) quand la soupape (29, 30) est ouverte.

6. Soupape-relais selon une quelconque des revendications 2 à 5, caractérisée en ce que :

la face annulaire (34) de l'organe de commutation (29) est plus petite que la face frontale (33) en regard de ce dernier.